# EUROPEAN PATENT APPLICATION

(11) **EP 4 671 949 A1**
(43) Date of publication of application: **31.12.2025**
(21) Application number: 24778028.1
(22) Date of filing: 26.03.2024
(51) Int. Cl.: G06F 3/06

(54) **MEMORY DATA MIGRATION METHOD, RELATED APPARATUS, AND COMPUTER DEVICE**

(30) Priority: 31.03.2023 CN 202310379809
(71) Applicant: HUAWEI TECHNOLOGIES CO., LTD., Shenzhen, Guangdong 518129 (CN)
(72) Inventor: LUO, Xingyu, Shenzhen, Guangdong 518129 (CN); YANG, Rui, Shenzhen, Guangdong 518129 (CN); YANG, Junwei, Shenzhen, Guangdong 518129 (CN); ZHU, Xiaoping, Shenzhen, Guangdong 518129 (CN)
(74) Representative: Gill Jennings & Every LLP
(86) International application number: PCT/CN2024/083897
(87) International publication number: WO 2024/199240

(57) **Abstract**

A method for migrating memory data, a related apparatus, and a computer device are disclosed, and relate to the computer field. The method includes: sampling a plurality of access requests in a periodic sampling mode indicated by a sampling rule; collecting statistics on access frequencies of pages indicated by a sampling result, to determine access temperatures of the pages based on the access frequencies of the pages; and triggering data migration based on the access temperatures. The access requests are sampled in a plurality of manners such as the periodic sampling mode according to the sampling rule, to ensure statistical accuracy of the access frequencies of the pages, and reduce an amount of statistical data of the access frequencies of the pages, so that a processor can obtain the access frequencies of the pages as quickly as possible. When data migration is triggered based on the access temperatures of the pages, hot data may be migrated to a near memory, and cold data may be migrated to a far memory, so that the processor can obtain frequently accessed data from the near memory as quickly as possible. This improves a data processing speed of the system and reduces a data processing delay.

## Description

This application claims priority to Chinese Patent Application No. 202310379809.9, filed with the China National Intellectual Property Administration on March 31, 2023 and entitled "METHOD FOR MIGRATING MEMORY DATA, RELATED APPARATUS, AND COMPUTER DEVICE", which is incorporated herein by reference in its entirety.

### TECHNICAL FIELD

This application relates to the computer field, and in particular, to a method for migrating memory data, a related apparatus, and a computer device.

### BACKGROUND

Currently, access temperatures of memories are determined by collecting statistics on access frequencies of memory pages, and data migration is performed based on the access temperatures of the memories. To be specific, a storage with a high access speed is expected to store frequently accessed data, and a storage with a low access speed is expected to store infrequently accessed data. However, due to a long statistical cycle of the access frequencies of the pages, a processor may not be able to obtain the access frequencies of the pages in time, affecting input/output (Input/Output, I/O) performance of a system. Consequently, the storage with the high access speed is likely to store the infrequently accessed data, or the storage with the low access speed is likely to store the frequently accessed data, affecting a data processing speed and a delay of the system.

### SUMMARY

This application provides a method for migrating memory data, a related apparatus, and a computer device, to improve a data processing speed of a system and reduce a data processing delay.

According to a first aspect, a method for migrating memory data is provided, where the method is applied to a hybrid memory system, the hybrid memory system includes a plurality of processors and a plurality of memory media of different types, and the processor is associated with at least two memory media of different types. The method includes: sampling obtained access requests in a periodic sampling mode indicated by a sampling rule; collecting statistics on access frequencies of pages indicated by a sampling result, to determine access temperatures of the pages based on the access frequencies of the pages; and triggering data migration between the at least two memory media of different types based on the access temperatures. The access request indicates an operation performed by an application run by a processor in a computer device on a memory medium. The access frequency intuitively indicates how frequently a data block is accessed by an application. A larger quantity of times that the data block is accessed by the application indicates that the data block is accessed more frequently by the application, and an access temperature of the data block is higher. A smaller quantity of times that the data block is accessed by the application indicates that the data block is accessed less frequently, and an access temperature of the data block is lower.

If a page is frequently accessed, a quantity of access requests for accessing the page is large. In this way, according to the method for migrating memory data provided in this application, the access requests are sampled in a plurality of manners such as the periodic sampling mode indicated by the sampling rule, so that access requests of frequently accessed pages are more likely to be sampled. A trend of frequently accessing the pages is determined based on a change trend of access frequencies of the pages, to ensure statistical accuracy of the access frequencies of the pages, and reduce an amount of statistical data of the access frequencies of the pages, so that a processor can obtain the access frequencies of the pages as quickly as possible. When data migration is triggered based on the access temperatures of the pages, hot data may be migrated to a near memory, and cold data may be migrated to a far memory, so that the processor can obtain frequently accessed data from the near memory as quickly as possible. This improves a data processing speed of the system and reduces a data processing delay.

An access speed of the near memory is greater than an access speed of the far memory. For example, the near memory may be a dynamic random access memory (Dynamic Random Access Memory, DRAM) or a double data rate synchronous dynamic random access memory (double data rate SDRAM, DDR SDRAM). The far memory can be a storage class memory (storage-class-memory, SCM).

The plurality of memory media of different types include a first memory medium and a second memory medium, the memory media associated with the processor include the first memory medium and the second memory medium, an access speed of the first memory medium is greater than an access speed of the second memory medium, and an access delay of the first memory medium is less than an access delay of the second memory medium. For example, the first memory medium may be a near memory, and the second storage medium may be a far memory.

In a possible implementation, sampling the obtained access requests according to the sampling rule, to obtain the sampling result includes: sampling the obtained access requests in a time interval-based sampling mode indicated by the sampling rule, to obtain the sampling result.

In this way, a time interval-based sampling operation is performed on access requests of the memory, so that dependency on storage of the amount of the statistical data of the access frequencies of the pages is reduced in a sampling interval; and the access frequencies of the pages are transmitted in the sampling interval, so that a requirement for an instantaneous bandwidth is reduced.

In another possible implementation, sampling the obtained access requests in the time interval-based sampling mode indicated by the sampling rule, to obtain the sampling result includes: sampling the obtained access requests at a sampling frequency indicated by the sampling rule, to obtain the sampling result. The sampling frequency indicates a quantity of access requests at a sampling interval.

The sampling frequency is determined based on a bandwidth of the memory. Therefore, a bandwidth and an amount of statistical data of the access frequencies of the pages are balanced, so that the processor can obtain the access frequencies of the pages as quickly as possible, to avoid a case in which when the data amount of the access frequencies of the pages is large, the processor cannot obtain the access frequencies of the pages in time due to a limited bandwidth.

Optionally, the sampling frequency is determined based on a quantity of pages in the memory. When there are a large quantity of pages, a quantity of access requests at a sampling interval indicated by the sampling frequency may be small. When there are a small quantity of pages, a quantity of access requests at a sampling interval indicated by the sampling frequency may be large, to collect an access frequency of each page as much as possible.

In another possible implementation, sampling the obtained access requests in the time interval-based sampling mode indicated by the sampling rule, to obtain the sampling result includes: sampling the obtained access requests based on a characteristic of a quantity of access requests in a sampling period indicated by the sampling rule, to obtain the sampling result. The sampling period indicates a time length at a sampling interval.

In another possible implementation, sampling the obtained access requests according to the sampling rule, to obtain the sampling result includes: sampling the obtained access requests at least once based on a quantity of sampling times indicated by the sampling rule, to obtain the sampling result. Therefore, a plurality of access requests are sampled a plurality of times, so that statistical accuracy of the access frequencies of the pages is ensured.

In another possible implementation, sampling the obtained access requests according to the sampling rule, to obtain the sampling result includes: sampling a sample in the obtained access requests according to the sampling rule, to obtain the sampling result.

In another possible implementation, collecting statistics on the access frequencies of the pages indicated by the sampling result includes: determining address indexes based on addresses indicated by the access requests, and collecting statistics on access frequencies associated with the address indexes, where the addresses indicated by the access requests indicate the pages. Therefore, the addresses indicated by the access requests are clipped, to reduce storage space occupied by an access frequency of a storage page.

In another possible implementation, the access request indicates an operation performed by the application run by the processor in the computer device on the memory in an interleaving manner.

According to a second aspect, an apparatus for migrating memory data is provided, where the apparatus for migrating memory data includes modules configured to perform the method for migrating memory data according to the first aspect or any one of the possible designs of the first aspect.

According to a third aspect, a memory is provided, where the memory includes a storage medium and a controller, and the storage medium is configured to store a group of computer instructions; and when executing the group of computer instructions, the controller performs an operation step of the method according to the first aspect or any one of the possible implementations of the first aspect, to identify an access frequency at which a data block in the memory is accessed by an application.

According to a fourth aspect, a chip is provided, including a processor and a power supply circuit, where the power supply circuit is configured to supply power to the processor; and the processor is configured to perform an operation step of the method according to the first aspect or any one of the possible implementations of the first aspect, to identify an access frequency at which a data block in a memory is accessed by an application.

According to a fifth aspect, a processor is provided, where the processor is associated with at least two memory media of different types, and the processor is configured to perform an operation step of the method according to the first aspect or any one of the possible implementations of the first aspect, to identify an access frequency at which a data block in the memory media is accessed by an application.

According to a sixth aspect, a computer device is provided, where the computer device includes a storage, a plurality of memory media of different types, and a processor, and the storage is configured to store a group of computer instructions; and when the processor executes the group of computer instructions, the processor is configured to perform an operation step of the method according to the first aspect or any one of the possible implementations of the first aspect, to identify an access frequency at which a data block in a memory is accessed by an application.

According to a seventh aspect, a computer-readable storage medium is provided, including computer software instructions, where when the computer software instructions are run in a processor, the processor is caused to perform an operation step of the method according to the first aspect or any one of the possible implementations of the first aspect.

According to an eighth aspect, a computer program product is provided, where when the computer program product runs on a computer, the computer is caused to perform an operation step of the method according to the first aspect or any one of the possible implementations of the first aspect.

For technical effects brought by any design in the second aspect to the eighth aspect, refer to technical effects brought by the first aspect or different designs in the first aspect. Details are not described herein again.

Based on the implementations provided in the foregoing aspects, this application may further combine technologies in this application to provide more implementations.

### BRIEF DESCRIPTION OF DRAWINGS

FIG. 1 is a diagram of composition of a computer device according to this application;
FIG. 2 is a diagram of a scenario of collecting statistics on access temperatures of memories according to this application;
FIG. 3 is a schematic flowchart of a method for migrating memory data according to this application;
FIG. 4 is a diagram of sampling access requests at a sampling frequency according to this application;
FIG. 5 is a diagram of sampling access requests based on a sampling period according to this application;
FIG. 6 is a diagram of obtaining a sample according to this application;
FIG. 7 is a diagram of address clipping according to this application;
FIG. 8 is a schematic flowchart of a method for collecting statistics on access temperatures of memories according to this application;
FIG. 9 is a schematic flowchart of a method for obtaining an access frequency according to this application; and
FIG. 10 is a diagram of a structure of an apparatus for migrating memory data according to this application.

### DESCRIPTION OF EMBODIMENTS

For ease of description, the terms in this application are first briefly described.

In a hierarchy of a computer storage system, a storage closer to a processor has a higher access speed and a smaller storage capacity. Storages are classified into a register, a cache, a main memory, and an external memory in ascending order of distances to the processor.

**A main memory (main memory)** is also referred to as an internal memory, and briefly, a primary memory or a memory (memory). The main memory is an important component of a computer system, that is, a bridge for communication between an external memory and a processor. The main memory is configured to temporarily store operation data in the processor and data exchanged between the processor and the external memory like a hard disk drive. For example, a computer starts to run, and loads data that needs to be operated from a main memory to a processor for operation. After the operation is completed, the processor stores an operation result in the main memory. For example, the main memory includes a dynamic random access memory (dynamic random access memory, DRAM) and a double data rate synchronous dynamic random access memory (double data rate synchronous DRAM, DDR SDRAM).

**An external memory** is also referred to as a secondary memory, and briefly, an external memory or a secondary memory. The external memory has a larger storage capacity and a lower access speed than a main memory. For example, the external memory includes a network memory, a solid state driver (solid state disk or solid state drive, SSD), and a hard disk drive (hard disk drive, HDD).

**A cache (cache)** is a high-speed and small-capacity storage between a processor and a main memory. The cache is briefly referred to as a cache. The cache has a smaller storage capacity and a higher access speed than the main memory. The cache includes a level 1 cache (L1 cache), a level 2 cache (L2 cache), and a level 3 cache (L3 cache). The level 1 cache is disposed inside a processor core. The level 2 cache may be disposed inside or outside the processor core. The level 1 cache and the level 2 cache are usually exclusive (exclusive) to the processor core where the level 1 cache and level 2 cache are located. The level 3 cache is usually disposed outside the processor core and is shared (shared) by a plurality of processor cores.

**A register (register)** is a small storage located inside a processor, and is configured to temporarily store data included an operation and an operation result. The register may be a common sequential logic circuit.

**A hierarchical storage technology (Hierarchical Storage Technology)** is used to store data respectively in storage devices with different performance in different manners based on indicators such as data importance, an access frequency, retention time, a storage capacity, and performance. The hierarchical storage technology implements automatic migration of data between the storage devices.

**Hot data** is data that is frequently accessed by a processor. If the hot data is stored in a near memory (near memory), the processor can obtain the data as quickly as possible. This improves a data processing speed of a system, reduces a data processing delay, and significantly improves access performance of the system.

**Cold data** is data that is not frequently accessed by a processor. If the cold data is stored in a far memory (far memory), more data can be stored, and more hot data can be stored in a near memory. This improves resource utilization of the near memory and reduces system costs. For example, a cache is a near memory relative to a main memory, and the main memory is a far memory. For another example, a main memory is a near memory relative to an external memory, and the external memory is a far memory.

**A cache line (cache_line)** is a unit used by a computer device to perform a read operation or a write operation on storage space of a memory. A size of one cache line may be 64 bytes (bytes, B).

**A page** is a unit used by a computer device to manage storage space of a memory. For example, a page size (page size) is 4 KB, 2 megabytes (Megabytes, MB), or another byte size. A 4 KB page may be referred to as a small page. A 2 MB page may be referred to as a large page. A smaller page indicates more resources required by the computer device to manage the memory, and a larger page indicates less resources required by the computer device to manage the memory. One page may include a plurality of cache lines, that is, a page size is a multiple of a size of a cache line.

**Interleaving** refers to evenly distributing accessed data in a memory across a plurality of memory channels based on unit storage space (for example, cache lines). An interleaving manner may be configured by a system administrator. Interleaving may be performed between a plurality of memory channels connected in one processor, or interleaving may be performed between a plurality of memory channels in a plurality of processors.

**A memory channel** refers to a plurality of memories connected in a processor in a computer device. The processor may perform an operation on a memory by using an interleaving technology. For example, the processor evenly distributes, across a plurality of memory channels based on a size of a cache line, data to be written into the memory. Further, the processor reads the data from the plurality of memory channels based on the size of the cache line. In this way, data processing is performed based on the plurality of memory channels, to improve memory bandwidth utilization and processing performance of the computer device.

**A sampling frequency (frequency of sample)** is also referred to as a sampling speed or a sampling rate, indicates a quantity of samples sampled from continuous signals in a unit time and used to form discrete signals, and is expressed in Hertz (Hertz, Hz). The reciprocal of the sampling frequency is a sampling period or sampling time, and the sampling frequency is a time interval between samples. In general, the sampling frequency is a quantity of signal samples that a computer can collect per unit time.

To improve a data processing speed and reduce a data processing delay of a system, this application provides a method for migrating memory data, where the method is applied to a hybrid memory system, the hybrid memory system includes a plurality of processors and a plurality of memory media of different types, and the processor is associated with at least two memory media of different types. The method includes: sampling obtained access requests in a periodic sampling mode indicated by a sampling rule; collecting statistics on access frequencies of pages indicated by a sampling result, to determine access temperatures of the pages based on the access frequencies of the pages; and triggering data migration between the at least two memory media of different types based on the access temperatures.

The access requests are sampled in a plurality of manners such as the periodic sampling mode indicated by the sampling rule, to ensure statistical accuracy of the access frequencies of the pages, and reduce an amount of statistical data of the access frequencies of the pages, so that the processor can obtain the access frequencies of the pages as quickly as possible. When data migration is triggered based on the access temperatures of the pages, hot data may be migrated to a near memory, and cold data may be migrated to a far memory, so that the processor can obtain frequently accessed data from the near memory as quickly as possible. This improves the data processing speed of the system, reduces the data processing delay, and significantly improves access performance of the system.

The method for migrating memory data provided in this application may be applied to fields such as artificial intelligence, big data, and cloud computing, and a scenario including a plurality of types of storage media, such as a high-performance and large-capacity storage system.

The following describes the implementations of this application in detail with reference to the accompanying drawings.

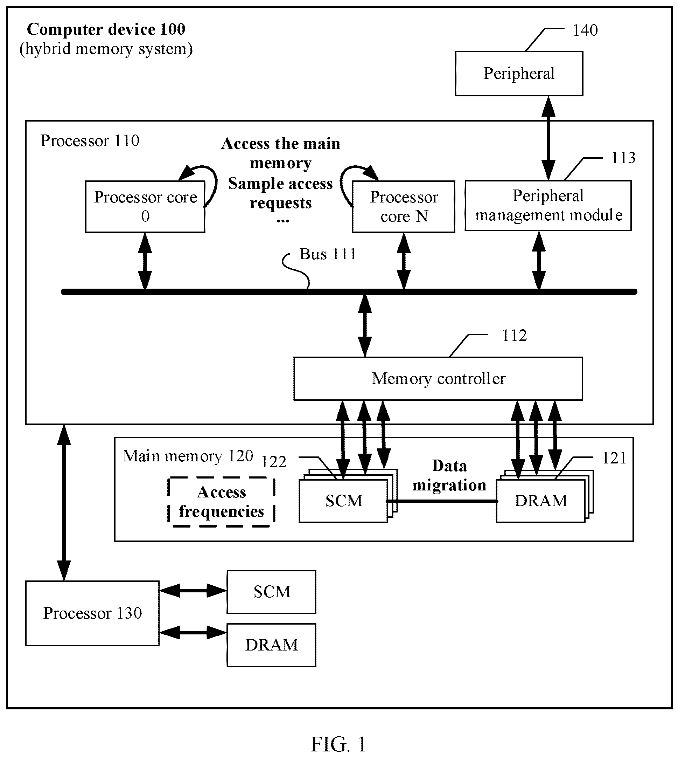

FIG. 1 is a diagram of composition of a computer device according to this application. As shown in FIG. 1, the computer device 100 includes a processor 110.

The processor 110 is a control center of the computer device 100. The processor 110 may be a computing unit with a computing capability, such as a central processing unit (central processing unit, CPU), a graphics processing unit (graphics processing unit, GPU), a data processing unit (data processing unit, DPU), a neural processing unit (neural processing unit, NPU), and an embedded neural-network processing unit (neural-network processing unit, NPU). The processor 110 may alternatively be another general-purpose processor, a digital signal processor (digital signal processor, DSP), an application-specific integrated circuit (application-specific integrated circuit, ASIC), a field-programmable gate array (field-programmable gate array, FPGA), a system on chip (system on chip, SoC) or another programmable logic device, a discrete gate or transistor logic device, a discrete hardware component, or the like. The general-purpose processor may be a microprocessor, any conventional processor, or the like. For ease of description, in the following embodiments, an example in which the processor 110 is a CPU is used for description.

The computer device 100 in FIG. 1 may include one or more processors (for example, the processor 110 and a processor 130). The processor may be a multi-core (multi-core) processor, that is, the processor includes one processor core (core) or a plurality of processor cores. For example, the processor 110 shown in FIG. 1 includes N processor cores. The processor herein may be one or more devices, circuits, and/or computing units configured to process data (for example, computer program instructions).

Because a quantity of cores of a single processor gradually increases, and a computing speed of the processor also continuously increases, requirements of the processor for a memory access speed and a memory capacity is increasingly high. In a possible implementation, a plurality of storage media of different types are used together as a main memory (memory or main memory for short) of the computer device, to increase a memory capacity, and as many memory resources and memory bandwidths as possible are allocated from the memory to each processor core, to meet the requirements of the processor for the memory access speed and the memory capacity. A system that uses the plurality of storage media of different types as the memory may be referred to as a hybrid memory system. The storage media used as a memory in the hybrid memory system may be referred to as memory media. The processor may be associated with at least one type of memory medium. To be specific, some processors are associated with one type of memory medium, and some processors are associated with more than two types of memory media.

For example, the computer device includes a plurality of memory media of different types. The plurality of memory media of different types include a first memory medium and a second memory medium. A storage capacity of the first memory medium is lower than a storage capacity of the second memory medium, an access speed of the first memory medium is higher than an access speed of the second memory medium, an access delay of the first memory medium is lower than an access delay of the second memory medium, and costs of the first memory medium are higher than costs of the second memory medium.

The first memory medium may include a dynamic random access memory (dynamic random access memory, DRAM). The second memory medium is a storage class memory (storage-class-memory, SCM), and the SCM includes at least one of a phase-change memory (phase-change memory, PCM), a magnetic random access memory (magnetoresistive random access memory, MRAM), a resistive random access memory (resistive random access memory, RRAM/ReRAM), a ferroelectric random access memory (ferroelectric random access memory, FRAM), a fast NAND (fast NAND), or a nano random access memory (Nano-RAM, NRAM).

For example, a plurality of memory media of different types that are used as a main memory 120 in the computer device 100 include a DRAM 121 and an SCM 122. The processor 110 is connected to the DRAM 121 and the SCM 122 through an interface that supports memory semantics.

The processor 110 is configured to: run an application to perform a read operation or a write operation on a memory medium (for example, a DRAM 121 or an SCM 122), and trigger data migration based on access hotness or coldness of the memory medium.

Triggering data migration based on the access hotness or coldness of the memory medium may be replaced with triggering data migration based on access hotness or coldness of data stored in the memory medium. Data migration includes migrating cold data to a next-level memory medium, and migrating hot data to an upper-level memory medium.

For example, when a cache line is cold data, a memory medium in which the cache line is located is a DRAM. In this case, the cache line is migrated to an SCM.

For another example, when a cache line is hot data, a memory medium in which the cache line is located is an SCM. In this case, the cache line is migrated to a DRAM.

It may be understood that, for any level of memory medium in the computer device, data migration may be triggered based on data access hotness or coldness. For each memory medium, data is migrated level by level based on the data access hotness or coldness. A current memory medium has a smaller storage capacity than a lower-level memory medium and a lower access speed than an upper-level memory medium.

In some embodiments, the computer device collects statistics on access frequencies of pages at a granularity of a page (for example, a 4 KB page or a 2 MB page), which is compatible with a memory page management manner of the computer device. Therefore, the method for migrating memory data is easy to use. For example, the processor performs an operation on the memory medium at a granularity of a cache line, and the cache line belongs to a managed page. In this case, when a cache line in the memory medium is operated once, a page to which the cache line belongs is also read and written once. The controller collects statistics on an access frequency of the page to which the operated cache line belongs, so that accuracy of identifying an access temperature of the page is effectively improved.

In this application, the processor 110 is configured to: sample obtained access requests in a periodic sampling mode indicated by a sampling rule; collect statistics on access frequencies of pages indicated by a sampling result, to determine access temperatures of the pages based on the access frequencies of the pages; and trigger data migration based on the access temperatures.

In addition, a body for executing statistics collection on an access temperature of a memory is not limited in this application. The execution body includes a medium module in the computer device, a hardware module having a computing function, or a processor.

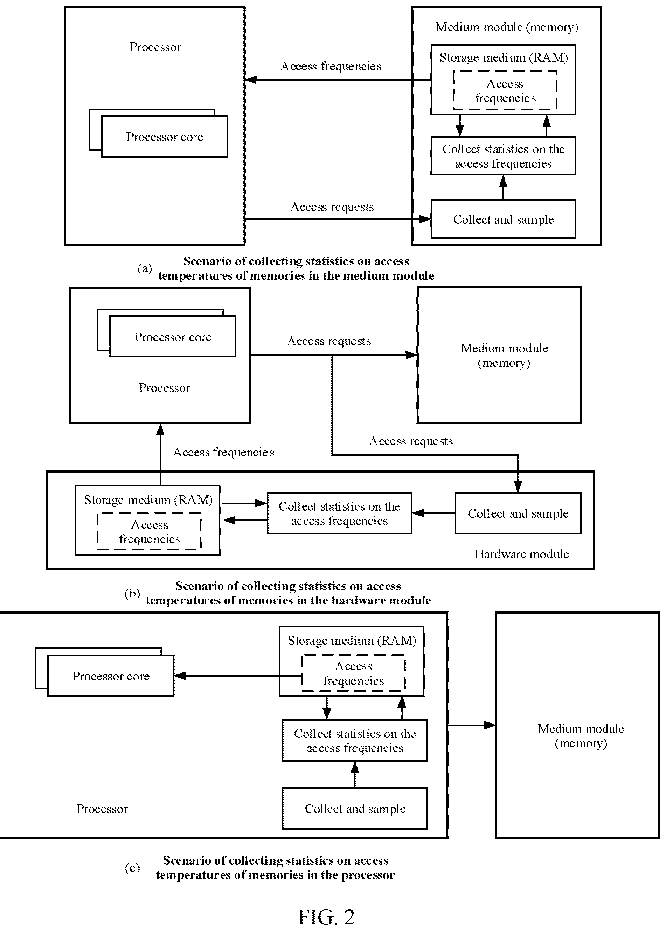

For example, as shown in (a) in FIG. 2, sampling of access requests is implemented in the medium module. The medium module may be any one of the plurality of memory media of different types. For example, the medium module may be a DRAM or an SCM.

The processor in the computer device sends access requests to the medium module, to indicate to perform a write operation or a read operation on the medium module. A controller (for example, a register clock driver (Register Clock Driver, RCD)) in the medium module may collect access requests, sample a plurality of access requests according to the sampling rule, collect statistics on access frequencies of pages indicated by a sampling result, store the access frequencies of the pages, and further feed back the access frequencies of the pages to the processor in an in-band or out-of-band manner.

(b) in FIG. 2 is different from (a) in FIG. 2 as follows: Another hardware module in the computer device samples access requests, and feeds back access frequencies of pages to the processor in an in-band or out-of-band manner. The hardware module may be a memory controller or a peripheral (for example, a complex programmable logic device (complex programmable logic device, CPLD), or an FPGA).

(c) in FIG. 2 is different from (a) in FIG. 2 as follows: The processor in the computer device samples access requests, and a processor core may obtain access frequencies of pages by reading a register in the processor.

The computer device 100 may further include a cache and a register.

The cache is configured to store instructions or data that may be accessed by the processor core in the processor 110 a plurality of times. This improves a data processing speed of the processor, and prevents the processor from frequently accessing the main memory 120.

In a physical form, the cache may be a random access memory (random access memory, RAM), a static random access memory (static random access memory, SRAM), or a dynamic random access memory (dynamic RAM, DRAM), or another type of storage device that may store information and instructions.

In a logical form, the cache may be a level 1 cache (L1 cache), a level 2 cache (L2 cache), a level 3 cache (L3 cache), or a cache device of any level. For example, caches disposed inside the processor core may be a level 1 cache (L1 cache) and a level 2 cache (L2 cache). A cache disposed outside the processor core may be a level 3 cache (L3 cache).

The register is configured to store instructions or data that may be accessed by the processor core in the processor 110 a plurality of times. Because an access speed of the register is higher than an access speed of the cache, the instructions or data that may be accessed by the processor core a plurality of times may be first stored in the register, so that the data processing speed of the processor can be further improved.

The processor core is connected to another component (for example, a processor core, a cache, or the main memory 120) in the processor through the bus 111, and accesses the another component through the bus 111. For example, the access frequency is transmitted between the processor core, the cache, and the main memory 120 through the bus 111. For another example, the processor core transmits a write instruction or a read instruction to the main memory 120 through the bus 111, so that the main memory 120 performs a write operation on the cache line according to the write instruction or performs a read operation on the cache line according to the read instruction. The bus 111 may be an industry standard architecture (industry standard architecture, ISA) bus, a peripheral component interconnect express (Peripheral Component Interconnect Express, PCIe) bus, an extended industry standard architecture (extended industry standard architecture, EISA) bus, a unified bus (unified bus, Ubus or UB), a computer express link (computer express link, CXL), a cache coherent interconnect for accelerators (cache coherent interconnect for accelerators, CCIX), a private bus standard of a non-standard system, or the like. The bus may be classified into an address bus, a data bus, a control bus, and the like. For ease of representation, only one bold line is used for representation in FIG. 1, but it does not represent that there is only one bus or one type of bus.

A connection manner between the processor core and the another component in the processor in FIG. 1 is merely an example for description. In a possible implementation, the processor core is connected to the another component in the processor through a ring bus (ring bus), and accesses the another component in the processor through the ring bus. In another possible implementation, the processor core is connected to the another component in the processor through a mesh bus (mesh bus), and the processor core accesses the another component in the processor through the mesh bus.

The processor 110 is connected to the main memory 120 by using a memory controller (memory controller, MC) 112. The processor 110 may perform various functions of the computer device 100 by running or executing software programs stored in the main memory 120, and invoking data stored in the main memory 120. For example, the processor 110 implements sampling of access requests by using the memory controller 112.

The main memory 120 may be a read-only memory (read-only memory, ROM), another type of static storage device that can store static information and instructions, a random access memory (random access memory, RAM), another type of dynamic storage device that can store information and instructions, an electrically erasable programmable read-only memory (electrically erasable programmable read-only memory, EEPROM), or the like. The main memory 120 is further configured to store a program related to this embodiment.

The processor 110 may further include a peripheral (external device) 140 and a peripheral management module 113. The peripheral 140 is connected to the peripheral management module 113 through the bus 111. The peripheral 140 may be an application-specific integrated circuit (application-specific integrated circuit, ASIC), for example, a microprocessor (digital signal processor, DSP), or one or more field programmable gate arrays (field programmable gate arrays, FPGAs), or a graphics processing unit (graphics processing unit, GPU), or a neural-network processing unit (neural-network processing unit, NPU). The peripheral 140 may also implement sampling of access requests, and feed back access frequencies to the processor core through the bus 111, so that the processor core triggers data migration based on data access hotness or coldness.

A structure of the device shown in FIG. 1 does not constitute a limitation on the computer device. The computer device may include components more or fewer than those shown in the figure, or a combination of some components, or a different component layout.

The following describes, in detail with reference to the accompanying drawings, the method for migrating memory data provided in this application.

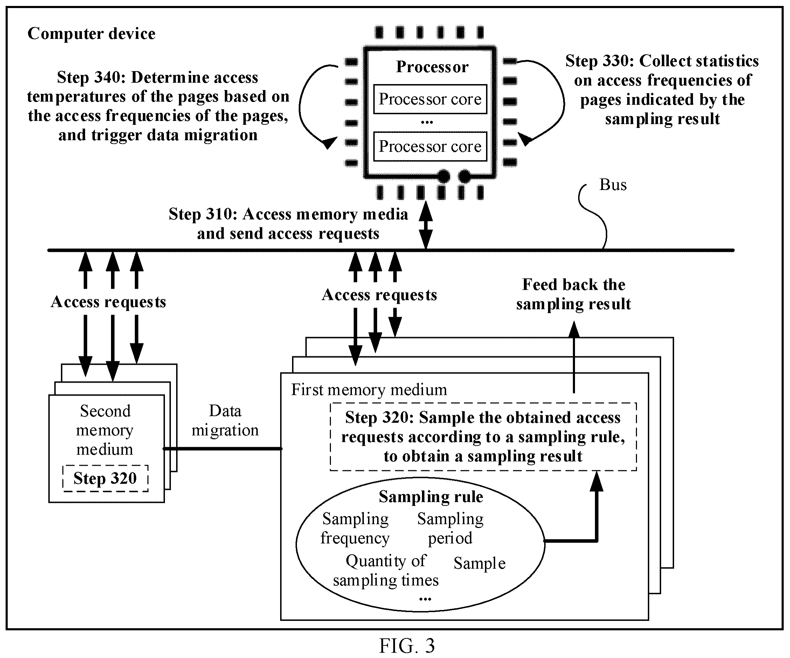

For ease of description, a scenario of statistics collection in the medium module shown in (a) in FIG. 2 is used as an example for description, that is, an example is used for description in which sampling of access requests is implemented in a memory medium. FIG. 3 is a schematic flowchart of a method for migrating memory data according to this application. As shown in FIG. 3, the method includes the following steps.

**Step 310: The processor sends access requests to memory media.**

When an application run by the processor in the computer device needs to perform read operations or write operations on the memory media, the access requests are sent to the memory media. Optionally, when accessing the memory media in an interleaving manner, the processor evenly distributes accessed data in the memory media across a plurality of memory channels based on unit storage space (for example, cache lines). It should be understood that evenly distributing the accessed data in the memory media across the plurality of memory channels based on unit storage space means evenly distributing the accessed data in the memory media to a plurality of memory media based on unit storage space. When accessing the memory media in the interleaving manner, the processor sends access requests to the plurality of memory media. The access request indicates to perform the read operations or the write operations on the memory media based on unit storage space (for example, a cache line). A size of unit storage space may be a size of a cache line in the memory medium accessed by the processor.

**Step 320: The memory medium samples the obtained access requests according to a sampling rule, to obtain a sampling result.**

The memory medium samples the received access requests in a periodic sampling mode indicated by the sampling rule, that is, the memory medium periodically samples the received access requests at a time interval, to obtain the sampling result. It may be understood that, in a process of continuously receiving access requests, the memory medium samples the received access requests at intervals. The sampling result includes a plurality of sampled access requests. In some embodiments, the memory medium samples the plurality of access requests in a time interval-based sampling mode, to obtain the sampling result.

The following describes manners in which the memory medium samples the obtained access requests.

Manner 1: The obtained access requests are sampled at a sampling frequency indicated by the sampling rule, to obtain the sampling result. The sampling frequency indicates a quantity of access requests at a sampling interval.

In some embodiments, after receiving the access requests, the memory medium numbers the access requests according to receiving time, to obtain a plurality of access requests. Further, the memory medium samples the plurality of access requests at the sampling frequency. In each sampling, at least one access request may be sampled from a sample, and the sampling result includes the at least one access request. The sample may include the access requests at a sampling interval indicated by the sampling frequency.

In addition, which access request is sampled from the sample is not limited in this application. For example, the at least one access request may be randomly sampled from the sample. For another example, the sample is divided into a plurality of parts, and one access request is sampled from each part. For another example, a 1^{st} access request, a last access request, or an intermediate access request is sampled from the sample. For another example, the at least one access request is sampled from the sample according to an odd number or an even number.

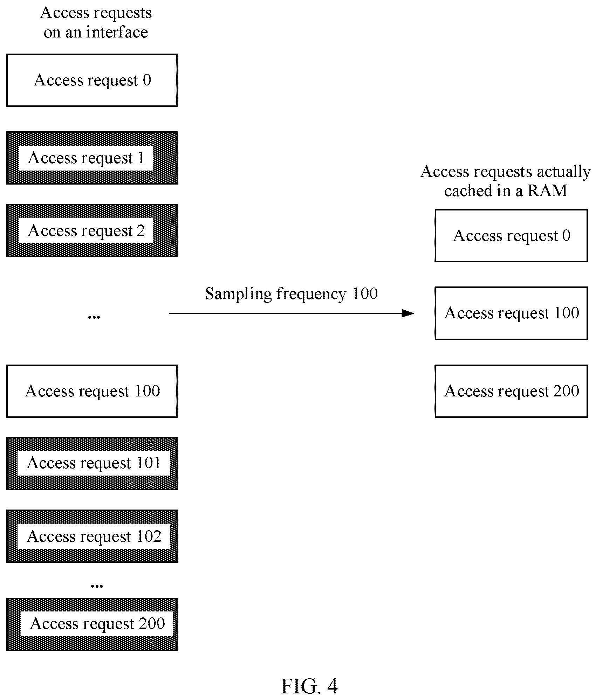

For example, as shown in FIG. 4, it is assumed that the sampling frequency is 100, and every 100 access requests are sampled. Every 100 access requests are one sample. The memory medium receives an access request 0 to an access request 100, and samples the access request 0 and the access request 100. An access request 200 is sampled from an access request 101 to the access request 200. In some embodiments, a counter may be set. Each time the memory medium receives one access request, the counter increments by one. When a value of the counter is equal to 0, 100, or 200, a sampling operation is performed, and addresses indicated by the access request 0, the access request 100, and the access request 200 respectively are stored.

Optionally, the sampling frequency is determined based on a bandwidth of the memory medium. A larger bandwidth indicates a larger amount of data that can be transmitted. In this case, a smaller sampling frequency may be set to increase a quantity of to-be-sampled access requests, to improve statistical accuracy of access frequencies of pages. On the contrary, a smaller bandwidth indicates a smaller amount of data that can be transmitted. In this case, a larger sampling frequency may be set to reduce a quantity of to-be-sampled access requests, to reduce an amount of statistical data of access frequencies of pages, and achieve a balance between statistical accuracy of the access frequencies of the pages and the amount of the statistical data of the access frequencies of the pages.

Optionally, the sampling frequency is determined based on a quantity of pages in the memory medium. If there are a large quantity of pages, a small sampling frequency is set. If there are a small quantity of pages, a large sampling frequency is set. In this way, an access frequency of each page is collected as possible, to improve statistical accuracy of the access frequencies of the pages.

Manner 2: The obtained access requests are sampled based on a characteristic of a quantity of access requests in a sampling period indicated by the sampling rule, to obtain the sampling result. The sampling period indicates a time length at a sampling interval.

In some embodiments, the memory medium samples access requests received in the sampling period. In each sampling, at least one access request may be sampled from a sample, and the sampling result includes the at least one access request. The sample includes a plurality of access requests received in the sampling period.

In addition, which access request is sampled from the sample is not limited in this application. For a specific explanation, refer to descriptions in Manner 1.

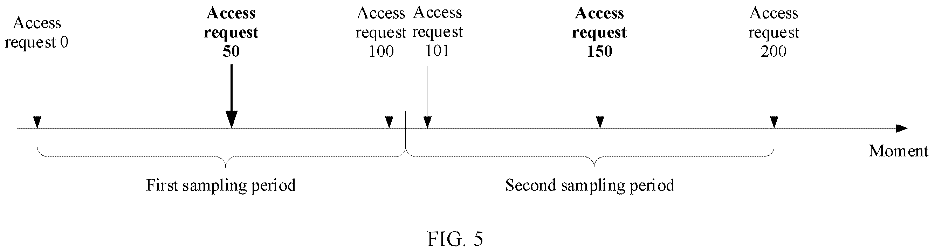

For example, as shown in FIG. 5, it is assumed that the sampling period is 1 microsecond, and access requests received in each microsecond are sampled once. The access requests received in each microsecond are one sample. In a 1^{st} sampling period, the memory medium receives an access request 0 to an access request 100, and samples an access request 50. In a 2^{nd} sampling period, the memory medium receives an access request 101 to an access request 200, and samples an access request 150. In some embodiments, a timer may be set. When the timer is equal to 0 microseconds, 1 microsecond, 2 microseconds, or the like, a sampling operation is performed, and an address indicated by a sampled access request is stored.

Manner 3: The obtained access requests are sampled at least once based on a quantity of sampling times indicated by the sampling rule, to obtain the sampling result.

In the solutions described in Manner 1 and Manner 2, the received access requests are sampled once to obtain the sampling result. In some embodiments, the memory medium may sample the received access requests twice or more, to obtain the sampling result.

For example, a same sampling rule may be used during sampling twice. For example, the memory medium first samples the obtained access requests at the sampling frequency to obtain a first sampling set, and then samples the first sampling set at the sampling frequency to obtain the sampling result.

For another example, different sampling rules may be used during sampling twice. For example, the memory medium first samples the obtained access requests at the sampling frequency to obtain a first sampling set, and then samples the first sampling set based on a sampling period to obtain the sampling result. For a specific sampling method based on the sampling frequency and the sampling period, refer to the foregoing descriptions. Details are not described again.

Therefore, the memory medium samples the received access requests at least twice in at least one periodic sampling mode, to ensure statistical accuracy of the access frequencies of the pages, and reduce an amount of statistical data of the access frequencies of the pages.

Manner 4: A sample in the received access requests is sampled according to the sampling rule, to obtain the sampling result.

The memory medium may first extract the sample from the received access requests, and then sample the sample according to the sampling rule, to obtain the sampling result. A method for extracting the sample from the received access requests is not limited. The sampling rule provided in this application may be used, or another method may be used. For example, the received access requests are numbered according to receiving time, a sample is extracted from the received access requests according to an odd number or an even number, and the sample is sampled according to the sampling rule, to obtain the sampling result.

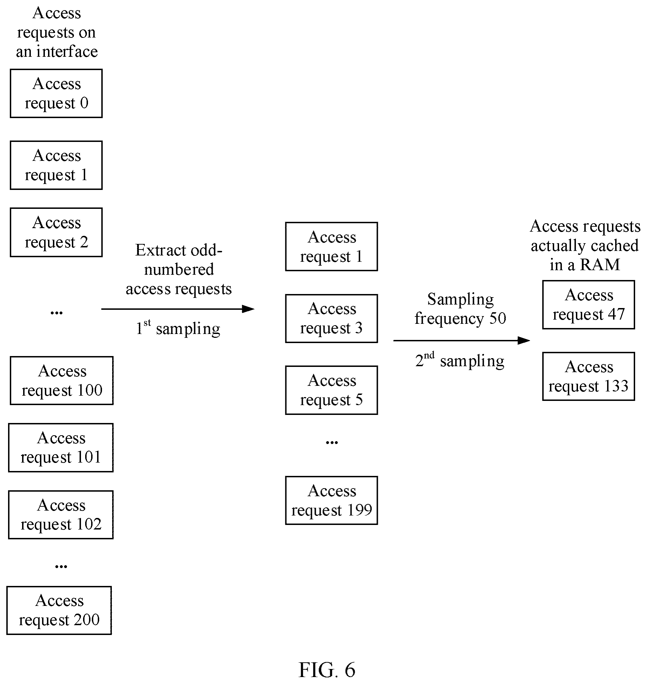

For example, as shown in FIG. 6, it is assumed that the sampling frequency is 50, and every 50 access requests are sampled. The memory medium receives an access request 0 to an access request 200, and first extracts odd-numbered access requests, to obtain a sample. The sample includes the access request 1, the access request 3, the access request 5, and the like. Then, at least one access request is sampled from the sample at the sampling frequency. For example, the sampling result includes the access request 47 and the access request 133.

It should be noted that the access request sampling methods provided in this application may be used independently or in combination based on factors such as a storage space requirement and statistical accuracy of the access frequencies of the pages. This is not limited in this application.

**Step 330: The processor collects statistics on the access frequencies of the pages indicated by the sampling result.**

The processor obtains the sampling result from the memory medium, where the sampling result includes information such as an address indicated by at least one access request. After the at least one sampled access request is obtained, a page to which an accessed data block belongs may be determined based on the physical address indicated by the access request, and statistics on an access frequency of the page is collected. In some embodiments, a storage location of the physical address indicated by the access request may be the same as or different from a storage location of the access frequency of the page. For example, a part of storage space in the memory medium is used to store the access frequency of the page. The physical address indicated by the access request may be stored in a storage other than the memory medium. The memory medium reads the access frequency of the page, and updates the access frequency. For example, each time the page is accessed, the access frequency of the page is increased by one, and the updated access frequency is written into the storage.

In some other embodiments, the memory medium clips the address indicated by the sampled access request to obtain an address index (index), reads, from a RAM based on the address index, an access frequency corresponding to the address index, and updates the access frequency corresponding to the address index, where the address indicated by the access request indicates a page. This reduces storage space occupied by the access frequency of the page. In different system architectures, a supported page size may be 4 KB, 64 KB, or 2 MB. Software trimming may be performed based on different page sizes, and a clipped address is used as an address index for counting, to obtain access frequencies of all pages.

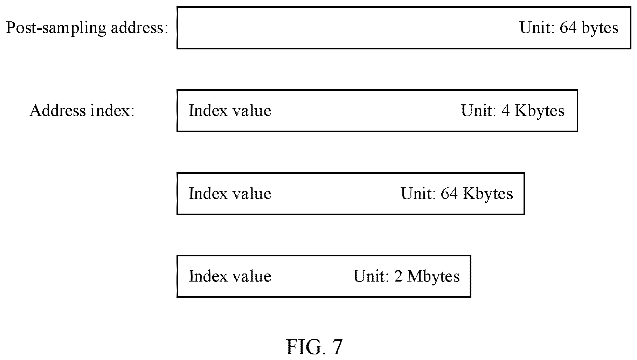

For example, as shown in FIG. 7, it is assumed that the address indicated by the sampled access request is 64B, that is, the post-sampling address is 64B. An address index obtained by clipping the post-sampling address may be 4 KB, 64 KB, or 2 MB.

Optionally, the RAM stores an address index corresponding to each page, and after obtaining the address index by clipping the address indicated by the access request, the memory medium updates an access frequency corresponding to the address index in the RAM.

Optionally, when the RAM does not store the address index determined by the memory medium, a new address index and a corresponding access frequency are written into the RAM.

**Step 340: The processor determines access temperatures of the pages based on the access frequencies of the pages, and triggers data migration.**

The processor determines the access temperatures of the pages based on the access frequencies of the pages, and triggers data migration. For example, if the access frequencies are greater than or equal to a threshold, it is determined that hotness or coldness of the data block is hot; or if the access frequencies are less than a threshold, it is determined that hotness or coldness of the data block is cold. When data migration is triggered based on the access temperatures of the pages, hot data may be migrated to a near memory, and cold data may be migrated to a far memory.

According to the method for migrating memory data provided in this application, the access requests are sampled in a plurality of manners such as the periodic sampling mode indicated by the sampling rule, to ensure statistical accuracy of the access frequencies of the pages, and reduce an amount of statistical data of the access frequencies of the pages, so that the processor can obtain the access frequencies of the pages as quickly as possible. When data migration is triggered based on the access temperatures of the pages, hot data may be migrated to a near memory, and cold data may be migrated to a far memory, so that the processor can obtain frequently accessed data from the near memory as quickly as possible. This improves the data processing speed of the system, reduces the data processing delay, and significantly improves access performance of the system.

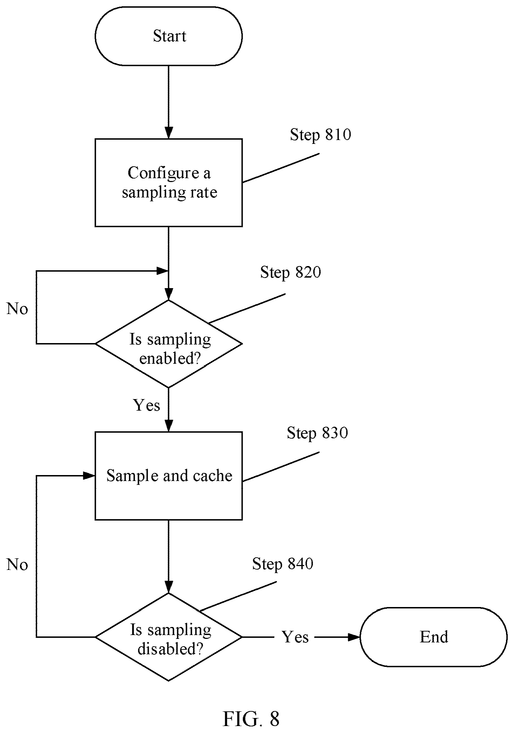

FIG. 8 is a schematic flowchart of a method for collecting statistics on access temperatures of memories according to this application. When the processor implements an access request sampling function, the processor core may configure a sampling rule by using a corresponding sampling module (step 810); the processor core enables the access request sampling function (step 820); if the enabling succeeds, step 830 is performed; or if the enabling fails, step 820 is performed; and collected access requests are sampled according to the sampling rule, and access frequencies of pages corresponding to addresses indicated by sampled access requests are collected and stored (step 830). If the access request sampling function is not disabled, the access request sampling function continues to be performed on the access requests, and the access frequencies of the pages corresponding to the addresses indicated by the sampled access requests are collected and stored. When storage space of the RAM is full, the processor core reads the access frequencies of the pages from the RAM, and determines access temperatures of the pages to trigger data migration. If the access request sampling function is disabled, the sampling ends, and the procedure ends (step 840). For a specific sampling process, refer to descriptions in the foregoing embodiment. Details are not described again.

Optionally, if the access request sampling function is implemented by another hardware module or memory outside the processor in the computer device, the access request sampling function and the access frequencies of the pages are enabled by transmitting the sampling rule in an out-of-band communication manner or an in-band communication manner.

For a specific explanation of the access request sampling function, refer to descriptions in the foregoing embodiment. Details are not described again.

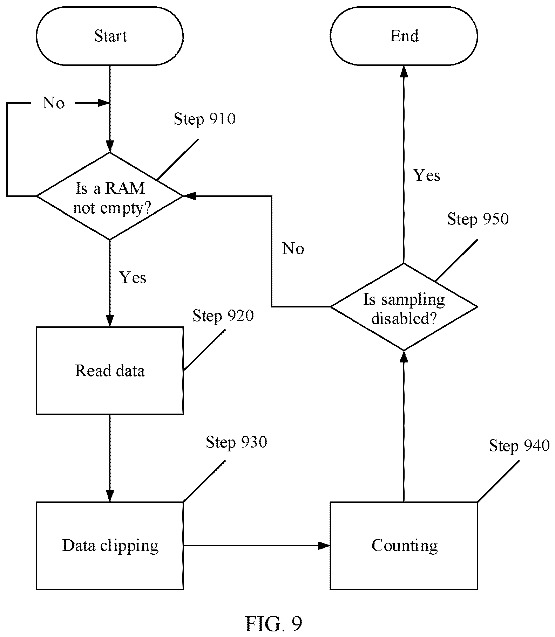

FIG. 9 is a schematic flowchart of a method for obtaining an access frequency according to this application. A processor that enables an access request sampling function checks a status of a RAM in polling mode (step 910). If the RAM is empty, the status of the RAM continues to be detected. If the RAM has an access request, the access request may be read from the RAM (step 920). Address bit clipping processing is performed on an address indicated by the read access request (step 930), and a quantity of bits after clipping may be determined based on a running status of the system, for example, the quantity of bits after clipping is 4 KB, 64 KB, or 2 MB. The clipped address is used as an address index, and the address index is used for counting (step 940). An initial value of each address index should be 0. Each time a corresponding address index is identified, an access frequency corresponding to the address index is increased by 1. Whether the access request sampling function is disabled is detected; and if the function is not disabled, continue to perform determining in step 910 until the access request sampling function is disabled, and the procedure ends (step 950).

It should be noted that, for a scenario of collecting statistics on an access temperature of a memory of a hardware module shown in (b) in FIG. 2 and a scenario of collecting statistics on an access temperature in a processor shown in (c) in FIG. 2, a data processing process is similar to a processing process in (a) in FIG. 2. For brevity, only the scenario shown in (a) in FIG. 2 is used as an example for description herein. A data processing process in another scenario is similar to the data processing process shown in FIG. 3, and details are not described herein again.

It may be understood that, to implement functions in the foregoing embodiment, the processor includes a corresponding hardware structure and/or software module for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

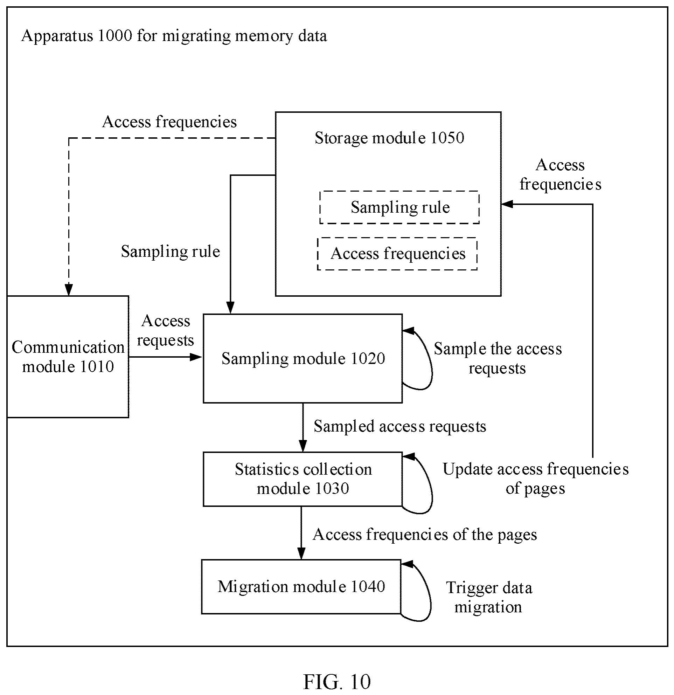

The foregoing describes in detail the method for migrating memory data according to this embodiment with reference to FIG. 1 to FIG. 9, and the following describes an apparatus for migrating memory data according to this embodiment with reference to FIG. 10.

FIG. 10 is a diagram of a possible structure of an apparatus for migrating memory data according to an embodiment. The apparatus for migrating memory data may be configured to implement functions of the memory in the foregoing method embodiments, and therefore can also implement beneficial effects of the foregoing method embodiments. In this embodiment, the apparatus for migrating memory data may be the first memory medium shown in FIG. 3, or may be a module (for example, a chip) used in a processor.

As shown in FIG. 10, the apparatus 1000 for migrating memory data includes a communication module 1010, a sampling module 1020, a statistics collection module 1030, a migration module 1040, and a storage module 1050. The apparatus 1000 for migrating memory data is configured to implement functions of the memory and the processor in the method embodiment shown in FIG. 3.

The communication module 1010 is configured to obtain access requests, where the access request indicates an operation performed by an application run by a processor in a computer device on a memory medium. For example, the communication module 1010 is configured to perform step 310 in FIG. 3.

The sampling module 1020 is configured to sample the obtained access requests according to a sampling rule, to obtain a sampling result, where the sampling rule indicates a periodic sampling mode. For example, the sampling module 1020 is configured to perform step 320 in FIG. 3.

The statistics collection module 1030 is configured to collect statistics on access frequencies of pages indicated by the sampling result, where the access frequencies of the pages are used to determine access temperatures of the pages. For example, the statistics collection module 1030 is configured to perform step 330 in FIG. 3.

Optionally, the sampling module 1020 is specifically configured to sample the obtained access requests at a sampling frequency indicated by the sampling rule, to obtain the sampling result, where the sampling frequency indicates a quantity of access requests at a sampling interval.

Optionally, the sampling module 1020 is specifically configured to sample the obtained access requests based on a characteristic of a quantity of access requests in a sampling period indicated by the sampling rule, to obtain the sampling result, where the sampling period indicates a time length at a sampling interval.

The migration module 1040 is configured to trigger migration of memory data between at least two memory media of different types based on the access frequencies. For example, the migration module 1040 is configured to perform step 340 in FIG. 3.

The storage module 1050 is configured to store the sampling rule and the access frequencies, so that the sampling module 1020 samples the obtained access requests according to the sampling rule when the processor in the computer device accesses a memory medium, to obtain the sampling result.

It should be understood that the apparatus 1000 for migrating memory data in this embodiment of this application may be implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), generic array logic (generic array logic, GAL), or any combination thereof. When data migration between the memories shown in FIG. 3 may also be implemented by using software, various modules may also be software modules, and the apparatus 1000 for migrating memory data and the modules thereof may also be software modules.

The apparatus 1000 for migrating memory data according to this embodiment of this application may correspondingly perform the method described in embodiments of this application, and the foregoing and other operations and/or functions of the units in the apparatus 1000 for migrating memory data are separately intended to implement corresponding procedures of the method in FIG. 3. For brevity, details are not described herein again.

This application further provides a processor. The processor includes a storage and at least two processor cores. The processor is associated with at least two memory media of different types. The storage is configured to store a group of computer instructions. When executing the group of computer instructions, the processor core performs operation steps of the methods in the foregoing embodiments, to identify an access frequency at which a data block in the memory medium is accessed by an application.

This application further provides a chip, including a processor and a power supply circuit, where the power supply circuit is configured to supply power to the processor; and the processor is configured to perform operation steps of the methods in the foregoing embodiments, to identify an access frequency at which a data block in a memory is accessed by an application.

This application further provides a computer system. The computer system includes a plurality of computer devices, and the computer device is configured to perform operation steps of the methods in the foregoing embodiments.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a computer device. Certainly, the processor and the storage medium may alternatively exist in the computer device as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD). The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A method for migrating memory data, wherein a hybrid memory system comprises a plurality of processors and a plurality of memory media of different types, and the processor is associated with at least two memory media of different types; and the method comprises:
sampling obtained access requests according to a sampling rule, to obtain a sampling result, wherein the access request indicates an operation performed by an application run by a processor in a computer device on a memory medium, and the sampling rule indicates a periodic sampling mode;
collecting statistics on access frequencies of pages indicated by the sampling result, wherein the access frequencies of the pages are used to determine access temperatures of the pages; and
triggering migration of memory data between the at least two memory media of different types based on the access frequencies.

2. The method according to claim 1, wherein sampling the obtained access requests according to the sampling rule, to obtain the sampling result comprises:
sampling the obtained access requests in a time interval-based sampling mode indicated by the sampling rule, to obtain the sampling result.

3. The method according to claim 2, wherein sampling the obtained access requests in the time interval-based sampling mode indicated by the sampling rule, to obtain the sampling result comprises:
sampling the obtained access requests at a sampling frequency indicated by the sampling rule, to obtain the sampling result, wherein the sampling frequency indicates a quantity of access requests at a sampling interval.

4. The method according to claim 3, wherein the sampling frequency is determined based on a bandwidth of the memory medium.

5. The method according to claim 2, wherein sampling the obtained access requests in the time interval-based sampling mode indicated by the sampling rule, to obtain the sampling result comprises:
sampling the obtained access requests based on a characteristic of a quantity of access requests in a sampling period indicated by the sampling rule, to obtain the sampling result, wherein the sampling period indicates a time length at a sampling interval.

6. The method according to any one of claims 1 to 5, wherein sampling the obtained access requests according to the sampling rule, to obtain the sampling result comprises:
sampling the obtained access requests at least once based on a quantity of sampling times indicated by the sampling rule, to obtain the sampling result.

7. The method according to any one of claims 1 to 6, wherein sampling the obtained access requests according to the sampling rule, to obtain the sampling result comprises:
sampling a sample in the obtained access requests according to the sampling rule, to obtain the sampling result.

8. The method according to any one of claims 1 to 7, wherein collecting statistics on the access frequencies of the pages indicated by the sampling result comprises:
determining address indexes based on addresses indicated by the access requests, and collecting statistics on access frequencies associated with the address indexes, wherein the addresses indicated by the access requests indicate the pages.

9. The method according to any one of claims 1 to 8, wherein the plurality of memory media of different types comprise a first memory medium and a second memory medium, the memory media associated with the processor comprise the first memory medium and the second memory medium, an access speed of the first memory medium is greater than an access speed of the second memory medium, and an access delay of the first memory medium is less than an access delay of the second memory medium.

10. An apparatus for migrating memory data, comprising:
a communication module, configured to obtain access requests, wherein the access request indicates an operation performed by an application run by a processor in a computer device on a memory medium;
a sampling module, configured to sample the obtained access requests according to a sampling rule, to obtain a sampling result, wherein the sampling rule indicates a periodic sampling mode;
a statistics collection module, configured to collect statistics on access frequencies of pages indicated by the sampling result, wherein the access frequencies of the pages are used to determine access temperatures of the pages; and
a migration module, configured to trigger migration of memory data between the at least two memory media of different types based on the access frequencies.

11. The apparatus according to claim 10, wherein sampling the obtained access requests according to the sampling rule, to obtain the sampling result comprises:
sampling the obtained access requests in a time interval-based sampling mode indicated by the sampling rule, to obtain the sampling result.

12. The apparatus according to claim 11, wherein sampling the obtained access requests in the time interval-based sampling mode indicated by the sampling rule, to obtain the sampling result comprises:
sampling the obtained access requests at a sampling frequency indicated by the sampling rule, to obtain the sampling result, wherein the sampling frequency indicates a quantity of access requests at a sampling interval.

13. The apparatus according to claim 12, wherein the sampling frequency is determined based on a bandwidth of the memory medium.

14. The apparatus according to claim 11, wherein sampling the obtained access requests in the time interval-based sampling mode indicated by the sampling rule, to obtain the sampling result comprises:
sampling the obtained access requests based on a characteristic of a quantity of access requests in a sampling period indicated by the sampling rule, to obtain the sampling result, wherein the sampling period indicates a time length at a sampling interval.

15. The apparatus according to any one of claims 10 to 14, wherein sampling the obtained access requests according to the sampling rule, to obtain the sampling result comprises:
sampling the obtained access requests at least once based on a quantity of sampling times indicated by the sampling rule, to obtain the sampling result.

16. The apparatus according to any one of claims 10 to 15, wherein sampling the obtained access requests according to the sampling rule, to obtain the sampling result comprises:
sampling a sample in the obtained access requests according to the sampling rule, to obtain the sampling result.

17. The apparatus according to any one of claims 10 to 16, wherein collecting statistics on the access frequencies of the pages indicated by the sampling result comprises:
determining address indexes based on addresses indicated by the access requests, and collecting statistics on access frequencies associated with the address indexes, wherein the addresses indicated by the access requests indicate the pages.

18. The apparatus according to any one of claims 10 to 17, wherein a plurality of memory media of different types comprise a first memory medium and a second memory medium, the memory media associated with the processor comprise the first memory medium and the second memory medium, an access speed of the first memory medium is greater than an access speed of the second memory medium, and an access delay of the first memory medium is less than an access delay of the second memory medium.

19. A memory, wherein the memory comprises a storage medium and a controller, and the storage medium is configured to store a group of computer instructions; and when executing the group of computer instructions, the controller performs an operation step of the method according to any one of claims 1 to 9, to identify an access frequency at which a data block in the memory is accessed by an application.

20. A chip, comprising a processor and a power supply circuit, wherein the power supply circuit is configured to supply power to the processor; and the processor is configured to perform an operation step of the method according to any one of claims 1 to 9, to identify an access frequency at which a data block in a memory is accessed by an application.

21. A processor, wherein the processor is associated with at least two memory media of different types, and the processor is configured to perform an operation step of the method according to any one of claims 1 to 9, to identify an access frequency at which a data block in the memory media is accessed by an application.

22. A computer device, wherein the computer device comprises a storage, a processor, and a plurality of memory media of different types, the processor is associated with at least two memory media of different types, the storage is configured to store a group of computer instructions, and when executing the group of computer instructions, the processor performs an operation step of the method according to any one of claims 1 to 9, to identify an access frequency at which a data block in the memory media is accessed by an application.
